**Europäisches Patentamt**

**European Patent Office**

**Office européen des brevets**

(19)

(11) Numéro de publication: **0 039 282**
**A1**

(12) # DEMANDE DE BREVET EUROPEEN

(21) Numéro de dépôt: **81400638.3**

(22) Date de dépôt: **22.04.81**

(51) Int. Cl.³: **B 25 J 11/00**
**F 16 D 71/00**
**//B23Q15/24**

(30) Priorité: **28.04.80 FR 8009489**

(43) Date de publication de la demande:
**04.11.81 Bulletin 81/44**

(84) Etats contractants désignés:
**BE CH DE GB IT LI LU NL SE**

(71) Demandeur: **COMPAGNIE D'ETUDES ET DE REALISATION DE CYBERNETIQUE INDUSTRIELLE**
**56 rue Roger Salengro**
**F-94120 Fontenay-sous-Bois(FR)**

(72) Inventeur: **Gilbert, Robert Yves**
**4, rue Milne Edwards**
**F-75017 Paris(FR)**

(74) Mandataire: **Lejet, Christian**
**Société JEUMONT-SCHNEIDER 31-32, Quai de Dion Bouton**
**F-92811 Puteaux Cedex(FR)**

(54) **Procédé et dispositifs de commande d'un système mécanique effectuant des opérations cycliques.**

(57) L'invention concerne un procédé et des dispositifs de commande d'un système mécanique devant effectuer des opérations cycliques avec arrêts momentanés d'un équipage mobile en des positions déterminées avec précision au moyen de butées. Selon l'invention, l'équipage mobile (1) étant entraîné par un moteur électrique pourvu d'un frein, le moteur électrique étant relié à une source d'alimentation par l'intermédiaire d'un interrupteur, pour obtenir une position d'arrêt précise sur l'une des butées (11), le procédé comporte les étapes suivantes:

- freinage de l'équipage mobile (1) de manière que ce dernier arrive à une vitesse pratiquement nulle sur la butée (11), le moteur restant alimenté.
- suppression du freinage, l'équipage étant alors à l'arrêt mais le moteur restant alimenté.
- déformation d'au moins un organe élastique (8) au moyen du couple engendré par le moteur toujours alimenté.
- déconnection de l'alimentation du moteur après blocage du rotor de ce dernier de telle manière que, aussitôt après l'organe élastique (8) en tendant à reprendre sa forme initiale, exerce une force de rappel maintenant l'équipage mobile (1) contre la butée (11).

Application à la manutention automatique.

EP 0 039 282 A1

FIG_1

## PROCEDE ET DISPOSITIFS DE COMMANDE D'UN SYSTEME MECANIQUE EFFECTUANT DES OPERATIONS CYCLIQUES.

La présente invention concerne un procédé de commande d'un système mécanique devant effectuer des opérations cycliques avec arrêts momentanés d'un équipage mobile en des positions déterminées avec précision, ainsi que des dispositifs mettant en oeuvre ce procédé.

Ce dernier trouve son application notamment dans la conception des robots de manutention pour lesquels la sécurité et la précision des manoeuvres à effectuer sont fondamentales.

On sait que, dans ce cas, des dispositifs fluidiques sont généralement mis en oeuvre. Toutefois, du fait des fuites inhérentes à de tels dispositifs, ce type de robots nécessite des entretiens répétés et des interventions manuelles très fréquentes ; il en résulte une augmentation des coûts de fonctionnement et une diminution de l'intérêt apporté par de tels robots.

La présente invention a pour but d'obvier à ces inconvénients au moyen d'un procédé dont la mise en oeuvre ne nécessite qu'une simple source d'alimentation électrique et, par suite qu'un entretien réduit.

Selon l'invention, le procédé de commande d'un système mécanique devant effectuer des opérations cycliques avec arrêts momentanés d'un équipage mobile en des positions déterminées avec précision au moyen de butées et étant entraîné par un moteur électrique pourvu d'un frein, le moteur électrique étant relié à une source d'alimentation par l'intermédiaire d'interrupteur, comporte les étapes suivantes pour obtenir une position d'arrêt précise sur l'une des butées :

- freinage de l'équipage mobile de manière que ce dernier arrive à une vitesse pratiquement nulle sur la butée, le moteur restant alimenté.

2

- suppression du freinage, l'équipage étant alors à l'arrêt mais le moteur restant alimenté.

- déformation d'au moins un organe élastique au moyen du couple engendré par le moteur toujours alimenté.

- déconnexion de l'alimentation du moteur après blocage du rotor de ce dernier, de telle manière que, aussitôt après, l'organe élastique, en tendant à reprendre sa forme initiale, exerce une force de rappel maintenant l'équipage mobile contre la butée.

Pour mettre en oeuvre ce procédé, le dispositif, selon un premier mode de réalisation, inclut un équipage mobile en translation entraîné par un moteur électrique coopérant par pignon avec une chaîne fixée à ses deux extrêmités à un bâti fixe au moyen d'un organe élastique permettant d'emmagasiner l'énergie mécanique du moteur lorsque l'équipage mobile est à l'arrêt, que le freinage est supprimé et que le moteur reste alimenté.

Les positions déterminées d'arrêts momentanés sont définies au moyen de butées solidaires du bâti fixe et coopérant avec des contre-butées solidaires de l'équipage mobile.

Selon un autre mode de réalisation du dispositif conformément à la présente invention, le dispositif inclut un ensemble bielle-manivelle commandé par le moteur. L'organe élastique est alors disposé dans la bielle.

Selon un autre mode de réalisation, le dispositif inclut un bras reliant une première à une seconde manivelles, la rotation de la première manivelle étant commandée par le moteur et l'organe élastique étant disposé dans le bras.

Selon un mode préféré, l'organe élastique est constitué par un ressort de traction ou de compression. En outre, le moteur est relié à la source d'alimentation électrique par l'intermédiaire d'un interrupteur retardé lors de son ouverture qui est commandée au moyen de l'un des capteurs de proximité.

3

La présente invention sera mieux comprise et d'autres buts, avantages et caractéristiques de celle-ci apparaîtront plus clairement à la lecture de la description qui suit de certains modes de réalisation donnés à titre d'exemples non limitatifs, description à laquelle une planche de dessins est annexée.

La figure 1 représente schématiquement un dispositif selon un premier mode de réalisation de l'invention.

Les figures 2 et 3 représentent schématiquement deux variantes d'un dispositif conforme à la présente invention.

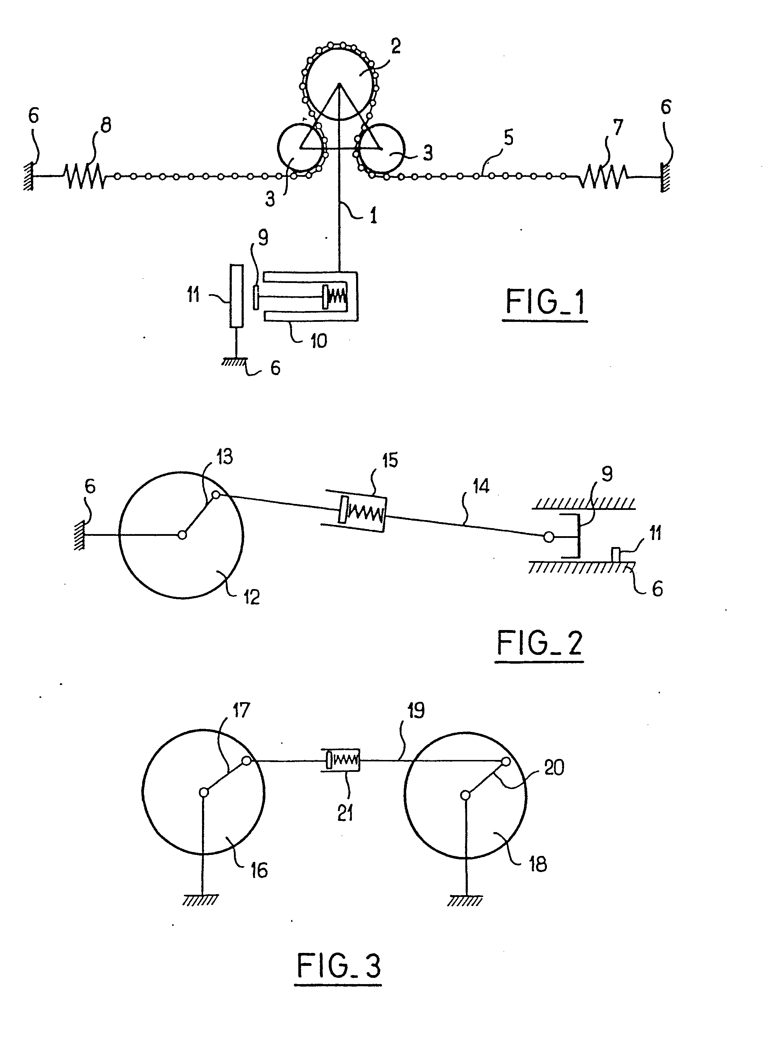

En référence maintenant à la figure 1, l'équipage 1 représenté schématiquement est mobile en translation. Un moteur entraîne le pignon 2 qui, coopérant avec les deux pignons fous 3 et 4 permet la translation de l'équipage 1 le long de la chaîne 5. Cette dernière est fixée au bâti 6 à ses deux extrémités au moyen d'organes élastiques 7,8. Ceux-ci sont favorablement constitués par des ressorts de traction ou des rondelles Belleville.

Pour effectuer l'arrêt de l'équipage 1, un capteur de proximité 9, par exemple un vérin à simple effet avec orifice d'échappement ce qui lui permet de jouer en outre le rôle d'amortisseur hydraulique, déclenche d'abord un frein électromagnétique monté sur l'arbre du moteur, de façon que l'équipage mobile 1 muni d'une contrebutée 10, arrive avec une vitesse pratiquement nulle sur la butée où il doit s'arrêter, par exemple la butée 11 solidaire du bâti 6.

Au moment où l'équipage mobile 1 atteint la butée 11, le capteur de proximité 9 déclenche alors la suppression du freinage électromécanique et, quelques instants après, c'est-à-dire le temps que ce freinage ait cessé d'agir, et que la chaîne 5 ait exercé, sous l'effet du couple du moteur, une traction sur l'organe élastique 8 qui se trouve à l'une de ses extrémités, par exemple au bout de 50 à 80 ms, le capteur de proximité déclenche à la fois la remise en action du frein électromagnétique et la mise hors tension du moteur. Ainsi la chaîne 5 reste tendue et le ressort 8 dont elle a entraîné la déformation tend à reprendre sa forme initiale. Comme le moteur est bloqué, la chaîne 5 sollicitée par le ressort 8 tend à repousser le moteur et l'équipage mobile 1 dont il est solidaire, vers la butée 11.

Ainsi la position d'arrêt définie par le contact de la contre butée 10 avec la butée 11 reste fixée fermement d'une manière très précise, mieux que par un quelconque système à cliquet qui nécessiterait un dispositif additionnel de libération ou bien un dispositif fluidique.

Le procédé selon l'invention peut également être mis en oeuvre dans le système bielle-manivelle représenté schématiquement figure 2. Le moteur assure la rotation de la roue 12 à laquelle est fixée la manivelle 13. Lorsque le piston 9 approche de la butée 11, un freinage est effectué de manière à ce qu'on arrive avec une vitesse pratiquement nulle sur la butée 11.

Au moment où le piston entre en contact avec la butée, le freinage est supprimé et, quelques instants après, c'est-à-dire après que le moteur ait emmagasiné une énergie mécanique dans l'organe élastique 15, le rotor du moteur est bloqué puis l'alimentation électrique déconnectée.

Ainsi, l'organe élastique 15 prenant appui sur la manivelle maintenant bloquée tend à pousser le piston 9 contre la butée 11 et la position d'arrêt est fixée de manière très précise, sans nécessiter un quelconque dispositif additionnel.

Il en est de même pour le système représenté figure 3 dans lequel le moteur assure la rotation de la roue 16 solidaire de la manivelle 17. Le mouvement de rotation de la roue 16 est transmis à la roue 18 au moyen d'un bras 19 s'appuyant sur la manivelle 17 et sur la manivelle 20 solidaire de la roue 18.

0039282

5

Lorsque la roue 18 atteint avec une vitesse pratiquement nulle la position angulaire où elle doit effectuer un arrêt déterminé par une butée non représentée, le freinage est supprimé et, après quelques instants, le moteur electrique est déconnecté de la source d'alimentation après blocage de/son rotor, de telle manière que la manivelle 17, en ayant continué à exercer pendant quelques instants une force sur le bras 19 et ainsi en ayant emmagasiné une énergie mécanique par déformation de l'organe élastique 21, une force de rappel soit engendrée qui tende à maintenir la roue 16 dans la position déterminée.

Un tel système trouve sont application dans les robots automatisés de manutention. L'équipage mobile en translation représenté figure 1 est solidaire, par exemple, d'un bras pourvu d'une pince à son extrêmité de manière à venir saisir ou déposer cycliquement des pièces en des points déterminés. Les pinces sont alors, de préférence, commandées au moyen du dispositif représenté figure 3. La position déterminée de la roue 18 est alors fixée par les dimensions de l'objet que les pinces saisissent.

Un tel système présente non seulement l'avantage de ne pas nécessiter d'entretiens fréquents, mais en outre celui d'une sécurité de fonctionnement même en cas de panne de courant. En effet, les forces de rappel engendrées grâce à l'énergie mécanique emmagasinée dans les organes élastiques prévus à cet effet, permettent notamment d'éviter que les pinces ne s'ouvrent en cas de coupure de l'alimentation du moteur et que l'objet transporté ne tombe.

Bien que seuls certains modes de réalisation préférés de l'invention aient été décrits, il est évident que toute modification apportée par l'Homme de l'Art dans le même esprit ne sortirait pas du cadre de la présente invention.

6

REVENDICATIONS

1 - Procédé de commande d'un système mécanique devant effectuer des opérations cycliques avec arrêts momentanés d'un équipage mobile en des positions déterminées avec précision au moyen de butées et étant entraîné par un moteur électrique pourvu d'un frein, le dit moteur électrique étant relié à une source d'alimentation par l'intermédiaire d'un interrupteur, le dit procédé étant caractérisé en ce que, pour obtenir une position d'arrêt précise sur l'une des dites butées, il comporte les étapes suivantes :

- freinage du dit équipage mobile de manière que ce dernier arrive à une vitesse pratiquement nulle sur la dite butée, le moteur restant alimenté.

- suppression du freinage, l'équipage étant alors à l'arrêt mais le moteur restant alimenté.

- déformation d'au moins un organe élastique au moyen du couple engendré par le moteur toujours alimenté.

- déconnection de l'alimentation du moteur après blocage du rotor de ce dernier,

de telle manière que, aussitôt après, le dit organe élastique, en tendant à reprendre sa forme initiale, exerce une force de rappel maintenant le dit équipage mobile contre la dite butée.

2 - Dispositif pour la mise en oeuvre du procédé selon la revendication 1 caractérisé en ce que le dit équipage étant mobile en translation, le dit moteur coopère au moyen de pignons avec une chaîne fixée à ses deux extrémités à un bâti fixé au moyen d'organes élastiques, les dites positions déterminées d'arrêts momentanés étant définies au moyen de butées solidaires du dit bâti et coopérant avec des contre-butées solidaires du dit équipage.

7

3 - Dispositif pour la mise en oeuvre du procédé selon la revendication 1 caractérisé en ce qu'il inclut un ensemble bielle-manivelle commandé par le dit moteur, le dit organe élastique étant disposé dans la dite bielle.

4 - Dispositif pour la mise en oeuvre du procédé selon la revendication 1 caractérisé en ce qu'il inclut un bras reliant une première à une seconde manivelle, la rotation de la dite première manivelle étant commandée par le dit moteur, le dit organe élastique étant disposé dans le dit bras.

5 - Dispositif selon l'une quelconque des revendications 2 à 4 caractérisé en ce que le dit organe élastique est constitué aussi bien par un ressort de traction, que par un ressort de compression.

FIG_1

FIG_2

FIG_3

0039282

Office européen
des brevets

**RAPPORT DE RECHERCHE EUROPEENNE**

| | **DOCUMENTS CONSIDERES COMME PERTINENTS** | | | **CLASSEMENT DE LA DEMANDE (Int. Cl.³)** |
|---|---|---|---|---|
| Catégorie | Citation du document avec indication, en cas de besoin, des parties pertinentes | Revendication concernée | | |
| | FR - A - 2 348 788 (SUPEMEC)<br>* Page 9, lignes 2-9 *<br><br>-- | 1,3 | | B 25 J 11/00<br>F 16 D 71/00//<br>B 23 Q 15/24 |
| A | FR - A - 1 578 892 (ARTUS)<br><br>---- | 1 | | |

**DOMAINES TECHNIQUES RECHERCHES (Int. Cl.³)**

B 25 J
B 23 Q
F 16 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-07-1981 | LAMMINEUR |

OEB Form 1503.1  06.78